Europäisches Patentamt

European Patent Office

Office européen des brevets

(19)

(11) Veröffentlichungsnummer: **0 026 432**
A1

(12) # EUROPÄISCHE PATENTANMELDUNG

(21) Anmeldenummer: **80105700.1**

(22) Anmeldetag: **23.09.80**

(51) Int. Cl.³: **G 03 D 3/13**
**H 05 F 3/02**

(30) Priorität: **28.09.79 DE 2939473**

(43) Veröffentlichungstag der Anmeldung:
**08.04.81 Patentblatt 81/14**

(84) Benannte Vertragsstaaten:
**BE CH FR GB IT LI NL SE**

(71) Anmelder: **AGFA-GEVAERT Aktiengesellschaft
Camera-Werk Patent- und Lizenzwesen Postfach
D-8000 München 90(DE)**

(72) Erfinder: **Geyken, Erwin
Brunhildenstrasse 4
D-8014 Neubiberg(DE)**

(54) **Transportwalze für fotografisches Material.**

(57) Eine Transportwalze für fotografisches Material, insbesondere für Röntgenfilme weist eine Walzenmantelfläche aus Kunststoff auf, in welchem ein antistatischer Zusatz beigegeben ist. Dieser Zusatz ist ein Metallpulver, vorzugsweise Silber. Damit wird der Oberflächenwiderstand des Walzenmantels kleiner als $1 \times 10^{10}$ Ohm, wodurch ein verblitzungsfreier Transport des fotografischen Materials gewährleistet werden kann.

Fig. 1

EP 0 026 432 A1

CAMERA-WERK MÜNCHEN
**PATENTABTEILUNG**

1

2 8. 09. 1979

CW 2333.6 PR/MR

10-pa-ch
2911A

## Transportwalze für fotografisches Material

Die Erfindung betrifft eine Transportwalze für fotografisches Material, insbesondere für Röntgenfilme im Trockenbereich eines Behandlungsgerätes, mit zwei seitlich überstehenden Lagerzapfen und einer Walzenmantelfläche aus Kunststoff mit einem antistatischen Zusatz.

Es gibt verschiedene Behandlungsgeräte, in welchen fotografisches, noch nicht entwickeltes Material im trockenen Zustand transportiert wird. Dies ist beispielsweise bei den Eingangsteilen von Entwicklungsmaschinen der Fall, in Beund Entladegeräten für Kassetten mit Röntgenfilmen, oder in Röntgenaufnahmeeinrichtungen, bei welchen lose Filmblätter unterschiedlicher Größe aus den jeweiligen Magazinen abgefaßt, in die Aufnahmestation transportiert und von dort zu einer Entwicklungseinrichtung gefördert werden.

Wenn nun diese Walzen eine Kunststoff- oder Gummioberfläche haben, so besteht die große Gefahr, daß diese sich elektrostatisch aufladen und daß bei einer Berührung von Film und Walze eine Entladung dieses elektrostatischen Potentials entsteht, was zur sichtbaren Abbildung der Entladung auf dem fotografischen Material führt und dieses somit unbrauchbar wird. Dies ist insbesondere dann unangenehm, wenn das Material bereits das latente Bild einer gemachten Aufnahme trägt.

Zur Vermeidung solcher Entladungen wurden bisher hochwertige Edelstahlwalzen in den Trockenbereichen verwendet. Derartige Walzen sind aber überaus teuer und außerdem sehr schwer, so daß das Gesamtgewicht des Behandlungsgerätes merklich hoch ist.

Anstelle solcher Edelstahlwalzen sind bereits auch sogenannte Anti-Blitz-Gummiwalzen vorgeschlagen worden. Bei diesen Walzen ist in den Gummi ein Antistatikum eingelagert, wodurch die statische Aufladung verringert werden soll. Gummiwalzen sind jedoch in ihren Transporteigenschaften äußerst ungeeignet, vor allen Dingen dann, wenn Filme auf kurzen Wegen stark umgelenkt werden müssen. Außerdem ist die Widerstandsfähigkeit von Gummi und die Beständigkeit verhältnismäßig gering.

Schließlich ist auch eine Kunststoffwalze bekannt geworden (US-PS 3 611 028), bei der zur Erniedrigung der elektrischen Aufladung in einer Elastomer-Kunststoffschicht aus einem Vinyl-Chlorid-Harz ein Alkylphtalylalkyglycolat eingelagert ist. Versuche haben gezeigt, daß mit einer solchen Elastomer-Walze die elektrostatische Aufladung zwar verringert wird, für viele Anwendungsfälle, insbesondere in der Röntgentechnik, jedoch noch nicht zufriedenstellend niedrig ist.

Aufgabe der Erfindung ist es daher, eine Transportwalze der eingangs genannten Art derart auszubilden, daß eine elektrostatische Aufladung und damit eine Entladung bei einer Film/Walzen-Berührung nahezu vermieden ist.

Diese Aufgabe wird durch die im Kennzeichen des Anspruchs 1 beschriebene Erfindung gelöst.

Mit der Erfindung wird erreicht, daß der Oberflächenwiderstand des Walzenmantels kleiner als $1 \times 10^{10}$ Ohm beträgt, wodurch ein verblitzungsfreier Transport des fotografischen Materials gewährleistet werden kann. Die Herstellkosten bleiben gegenüber Gummi- oder Edelstahlwalzen wesentlich niedriger. Außerdem kommt der Benutzer einer solchen Walze in den Genuß der für Kunststoff an sich bekannten Vorteile, wie beispielsweise hohe Lebensdauer durch nahezu verschleißfreie Oberfläche, geringes Gewicht, chemiebeständig, pflegeleicht und Transportsicherheit aufgrund des geringen Reibwertes der Walzenoberfläche.

Weitere Einzelheiten und Vorteile der Erfindung ergeben sich aus den Unteransprüchen im Zusammenhang mit der Beschreibung von Ausführungsbeispielen, die anhand von Figuren eingehend erläutert sind. Es zeigen:

Fig. 1      einen Querschnitt durch eine erste Ausführungsform einer erfindungsgemäßen Transportwalze;

Fig. 2      einen Querschnitt durch eine zweite Ausführungsform einer Walze;

Fig. 3      einen Teilquerschnitt durch eine dritte Ausführungsform einer Walze; und

Fig. 4      einen Teilquerschnitt durch eine vierte Ausführungsform einer Walze.

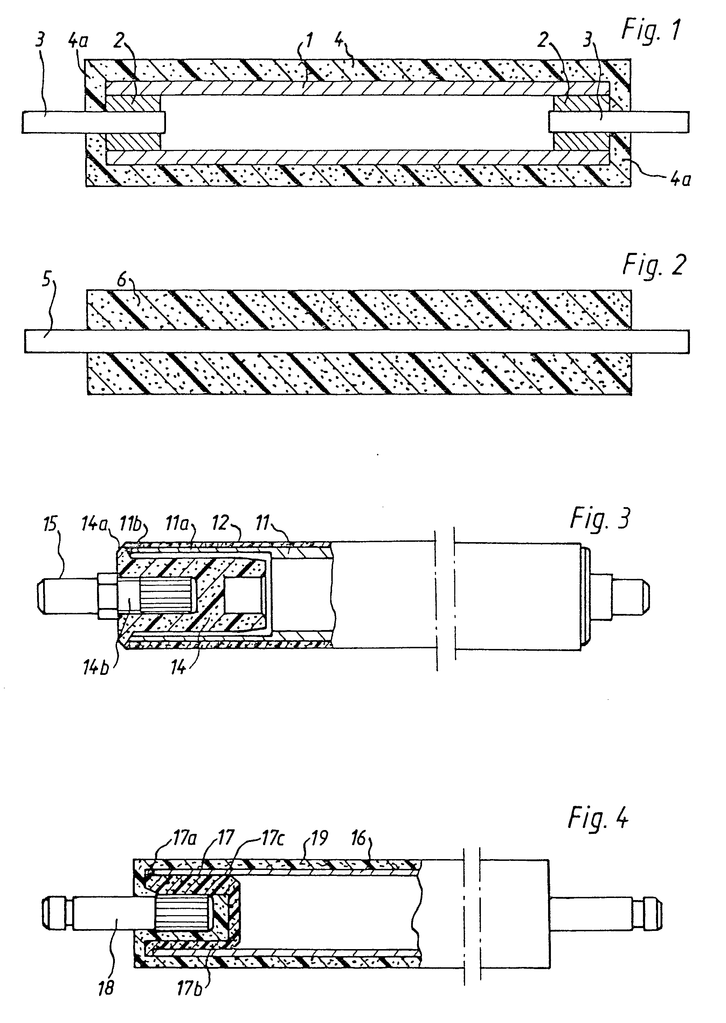

In Fig. 1 ist mit 1 ein metallischer Grundkörper bezeichnet, welcher die Form einer zylindrischen Hülse aufweist, und in dessen beiden Enden ein Stopfen 2 eingesetzt ist. Die Stopfen 2 tragen ein Wellenstück 3, das vorzugsweise aus Edelstahl gefertigt ist. Auf dem Grundkörper 1 ist eine
Kunststoffschicht 4 in einer Dicke aufgetragen, welche
größer ist als die Dicke des metallischen Grundkörpers 1. An
den Stirnflächen der Walze ist die Kunststoffschicht 4 in
Stirnschichten 4a bis an die Wellenstücke 3 herangezogen.
Die Kunststoffschicht 4 bzw. 4a besteht vorzugsweise aus
Hart-PVC, feinkristallinem Polyamid, Polypropylen, Polyäthylen oder einer Mischung dieser Werkstoffe und ist
erfindungsgemäß mit einem Metallpulver versetzt. Als Metallpulver ist vorzugsweise Silber verwendet, wodurch der Oberflächenwiderstand der Kunststoffschicht, der nach DIN 53482
gemessen wird, einen Wert von kleiner $1 \times 10^9$ Ohm aufweist.

In Fig. 2 ist eine andere Ausführungsform der erfindungsgemäßen Transportwalze dargestellt, bei welcher auf einer
durchgehenden Achse 5 ein gegenüber dem Achsdurchmesser sehr
dicker Kunststoffmantel 6 aufgetragen ist. Als Kunststoffmaterial können die gleichen Kunststoffe nach Fig. 1 mit der
entsprechenden Zugabe von Metallpulver verwendet werden.

In den Fig. 3 und 4 sind Transportwalzen beschrieben, welche
insbesondere sehr korrosionsbeständig sind und außerdem
aufgrund ihrer Formstabilität eine im Vergleich zu ihrem
Durchmesser große Länge aufweisen können.

In Fig. 3 ist mit 11 ein Metallrohr bezeichnet, im vorliegenden Fall ein Aluminiumrohr. Anstelle des Aluminiums
könnten auch andere Werkstoffe verwendet werden, die ebenfalls keine hohe Korrosi-onsbeständigkeit gegenüber den
Behandlungsflüssigkeiten fotografischen Prozesses aufweisen.
Wichtig ist, daß der Werkstoff des Rohres eine gute Verbindung mit einer aufgetragenen Schicht 12 aus einem thermoplastischen Kunststoff eingeht. Die Kunststoffschicht 12
kann aus Hartpolyvinylchlorid, feinkreistallinem Polyamid,
Polypropylen, Polyäthylen oder einer Mischung dieser Werkstoffe bestehen, in welche das Metallpulver integriert ist.
Das Metallrohr 11 ist beiderseits auf einer gewissen
Länge 11a innen ausgedreht auf einen Durchmesser, der etwas
größer ist als der Außendurchmesser eines Kunststoffeinsatzes 14, in dem ein Lagerzapfen 15 aus nicht rostendem
Stahl sitzt. Der Kunststoff für den Einsatz 14 stimmt zweckmäßigerweise mit dem Material der Umhüllung 12 überein.
Zusammen mit dem Ausdrehen des Anfangs des Rohres 11 wird
die Innenkante des Metallrohres 11b so stark abgeschrägt,
daß an dem stirnseitigen Flansch 14a des Kunststoffeinsatzes
nur die Kunststoffumhüllung 12 anliegt. Zur Verklebung von
gleichartigen Kunststoffen ist eine große Anzahl von Klebstoffen bekannt, die eine flüssigkeitsdichte, chemikalienfeste Verbindung ermöglichen.

Der Lagerzapfen 15 ist in dem Einsatz 14 mit einem gerändelten Ende in einer Bohrung 14b konzentrisch zu dem Umfang
des Einsatzes 14 eingeklebt, eingespritzt oder eingeschallt.
Das letzte Befestigungsverfahren besteht darin, daß während
des Einpressens dem Metallteil 15 eine Schwingung mit einer
Frequenz mindestens im Schallbereich überlagert wird. Diese
Schwingung führt zu einer Erwärmung der an dem Metallteil
anliegenden und reibenden Kunststoffoberfläche, so daß hier
ein Fließvorgang eintritt, der das Einschieben erleichert
und nach dem Abkühlen das Metallteil fest mit dem Kunststoff
verbindet.

Eine andere Ausführungsform der Erfindung ist in der Fig. 4
gezeigt. In diesem Fall ist in das Metallrohr 16, wiederum
ein Aluminiumrohr, an den Stirnseiten jeweils ein Einsatz 7
mit dem Lagerzapfen 18 eingeführt. Die axiale Zentrierung
des Einsatzes 17 übernimmt ein Flansch 17a, während die
Zentrierung in radialer Richtung durch den Umfang 17b des
Einsatzes 17 erfolgt. Der Einsatz 17 besteht wiederum aus
einem thermoplastischen Kunststoff, der mit dem Werkstoff
der Umhüllung übereinstimmt. Der Lagerzapfen 18 ist in diesem Fall in dem Einsatz 17 nicht an seinem ganzen Umfang aufgenommen, sondern nur mittels vierer Rippen 17c gehalten. Diese Ausführungsform ist von Bedeutung, um eine elastische Formänderung des Einsatzes 17 zu ermöglichen, wenn der Innendurchmesser des Rohres nicht groß genug ist, um den Einsatz ohne Verformung aufzunehmen. Auf diese Weise kann unter Umständen das Ausdrehen des Metallrohres entfallen. Das Metallrohr 16 mit den Einsätzen 17 und den Lagerzapfen 18 wird dann in eine Spritzform eingelegt, deren Innenflächen der gezeichneten äußeren Kontur einer Kunststoffumhüllung 19 um das Rohr 16 mit einem entsprechenden Aufmaß entsprechen. Die Spritzform hat entsprechende Öffnungen zur Aufnahme der Lagerzapfen 18 und Einspritzöffnungen an den Stirnseiten der Walze. Die Spritzform ist zweckmäßigerweie in Längsrichtung teilbar. In dieser Spritzform wird die Walze in einem einzigen Arbeitsvorgang allseitig mit einem thermoplastischen Kunststoff, insbesondere Hart-PVC, umspritzt. Die flüssigkeitsdichte Verbindung zwischen dem Lagerzapfen 18 und der Kunststoffumhüllung 19 ist damit automatisch gegeben. Der umspritzte Rohling wird dann unter Einspannung an den Lagerzapfen 18 am Umfang eventuell in zwei Arbeitsgängen durch Drehen fertigbearbeitet.

Die auf diese Weise hergestellten Walzen mit sehr hoher Oberflächengüte sind den bisher verwendeten Gummiwalzen schon deshalb überlegen, weil sich daran keine Gelantinereste festsetzen können, deren Beseitigung von Gummiwalzen erhebliche Schwierigkeiten bereitet. Die Walzen haben auch gegenüber dem Film bzw. dessen während des Transportes anstoßenden Vorderkanten eine hohe Widerstandsfähigkeit, so daß kaum dadurch verursachter Verschleiß feststellbar ist.

Mit den in Fig. 3 und 4 beschriebenen Walzen wird schließlich der Vorteil erreicht, daß das Metallrohr für die erforderliche Formbeständigkeit auch unter ungünstigen Bedingungen sorgt, während die das Metallrohr umschließende, an den Filmen angreifende Kunststoffoberfläche selbst chemikalienbeständig ist und das Metallrohr vor Korrosion durch die
Chemikalien schützt. Durch die geschlossenen Einsätze wird
dabei vermieden, daß auch nur die kleinste Menge von Flüssigkeit selbst bei einem viele Jahre dauernden Betrieb in
das Innere des Metallrohrs dringen kann.


<u>Hierzu 1 Blatt Zeichnungen</u>

CAMERA-WERK MÜNCHEN
PATENTABTEILUNG

2 8. 09. 1979
10-pa-ch
2911A

CW 2333.6 PR/MR

Ansprüche

1. Transportwalze für fotografisches Material, insbesondere für Röntgenfilme im Trockenbereich eines Behandlungsgerätes, mit zwei seitlich überstehenden Lagerzapfen und einer Walzenmantelfläche aus Kunststoff mit einem antistatischen Zusatz, dadurch gekennzeichnet, daß als antistatischer Zusatz ein Metallpulver verwendet ist.

2. Transportwalze nach Anspruch 1, dadurch gekennzeichnet, daß als Metallpulver Silber eingelagert ist.

3. Transportwalze nach einem der Ansprüche 1 oder 2, dadurch gekennzeichnet, daß die das Metallpulver tragende Kunststoffschicht (4, 4a; 6; 12, 14a; 19) mit den Lagerzapfen (3; 5; 15; 18) in Verbindung stehen, welche geerdet sind.

4. Transportwalze nach einem der Ansprüche 1 bis 3, dadurch gekennzeichnet, daß die Kunststoffschicht (4, 4a; 6, 12, 14a; 19) aus Hart-PVC, feinkristallinem Polyamid, Polypropylen, Polyäthylen oder einer Mischung dieser Werkstoffe besteht und als Schicht verhältnismäßig großer Dicke auf einen rohrförmigen Grundkörper (1; 11; 16) oder eine durchgehende Achse (5) extrudiert, gegossen oder gespritzt ist.

5. Transportwalze nach einem der Ansprüche 1 bis 4, dadurch gekennzeichnet, daß in die seitlichen Rohröffnungen des Grundkörpers (11; 16) Wellenstücke (15, 18) tragende, nach innen geschlossene Einsätze (14; 17) aus Kunststoff eingefügt sind, welche flüssigkeitsdicht mit dem Kunststoff-Walzenmantel (12; 19) verbunden sind.

6. Transportwalze nach Anspruch 6, dadurch gekennzeichnet, daß die Wellenstücke (15) in die Einsätze (14) eingeklebt, eingespritzt oder eingeschallt sind.

7. Transportwalze nach Anspruch 5, dadurch gekennzeichnet, daß die Wellenstücke (18) in den Einsätzen (17) nur mittels Rippen (17c) gehalten sind und daß der Zwischenraum zwischen Wellenstück (18) und Einsatz (17) beim Umspritzen des Grundkörpers (16) mit Kunststoff ausfüllbar ist.

<u>Hierzu 1 Blatt Zeichnungen</u>

Fig. 1

Fig. 2

Fig. 3

Fig. 4

CW 2333.6 PR

| EINSCHLÄGIGE DOKUMENTE | | | KLASSIFIKATION DER ANMELDUNG (Int Cl.) |
|---|---|---|---|
| Kategorie | Kennzeichnung des Dokuments mit Angabe, soweit erforderlich, der maßgeblichen Teile | betrifft Anspruch | |
| | FR - A - 2 156 855 (REUTER MASCHINEN- UND WERKZEUGBAU GmbH)  * Seiten 6-12; Figuren 1-8 * | 1,2,3 | G 03 D 3/13<br>H 05 F 3/02 |
| | -- | | |
| | DE - A - 2 232 424 (AGFA-GEVAERT AG)  * Seiten 4-9; Figuren 1-4 * | 4-7 | |
| | -- | | |
| A | FR - A - 2 134 841 (KODAK-PATHE)  * Seiten 2,3 * | 1 | **RECHERCHIERTE SACHGEBIETE (Int. Cl.)** |
| | -- | | G 03 D  3/13<br>5/06<br>15/02 |
| A | FR - A - 1 355 106 (R.G. KUPFER)  * Seite 2, Spalte 1, Zeilen 40-55; Seite 2, Spalte 2, Zeilen 1-23; Figuren 1-4 * | 1 | H 05 F  3/00<br>3/02<br>B 65 H 27/00<br>5/00<br>3/18 |
| | ---- | | B 41 N  7/00<br>G 03 C  1/82<br>F 16 C 13/00<br>G 03 B 27/58<br>B 65 G 39/02 |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-12-1980 | BOEYKENS |

EPA form 1503.1  06.78